Europäisches Patentamt

European Patent Office

Office européen des brevets

(19)

(11) Numéro de publication : **0 465 391 A1**

## (12) DEMANDE DE BREVET EUROPEEN

(21) Numéro de dépôt : **91420227.0**

(22) Date de dépôt : **04.07.91**

(51) Int. Cl.⁵ : **B29C 53/06**

(30) Priorité : **06.07.90 FR 9009180**

(43) Date de publication de la demande :
**08.01.92 Bulletin 92/02**

(84) Etats contractants désignés :
**AT BE CH DE DK ES FR GB GR IT LI LU NL SE**

(71) Demandeur : **CEBAL**
**98, boulevard Victor Hugo**
**F-92115 Clichy (FR)**

(72) Inventeur : **Schneider, Bernard**
**4,rue des Six Frères**
**F-51800 Ste Menehould (FR)**

(74) Mandataire : **Séraphin, Léon et al**
**PECHINEY 28, rue de Bonnel**
**F-69433 Lyon Cedex 03 (FR)**

(54) **Procédé d'obtention d'un pli sur une feuille ou une pièce tubulaire, en matière plastique, en particulier dans le cas d'un tube, et tube obtenu.**

(57)    L'invention a pour objet un procédé d'obtention d'un pli sur une feuille ou une pièce tubulaire (1) en matière plastique d'épaisseur 0,25 à 0,8 mm, caractérisé en ce que on lamine au moins une portion repliée de ladite feuille ou une portion longitudinale de ladite pièce tubulaire entre des galets (2,3) serrant ladite portion de façon à obtenir un pli écrasé par ce laminage présentant à son sommet une striction extérieure de profondeur comprise entre 2% et 15% de ladite épaisseur, ce pli étant alors articulé élastiquement.

Il s'agit en particulier de l'ébauche de la jupe souple d'un tube, et du tube obtenu.

L'invention s'applique à des tubes souples conditionnant des produits divers, les pressées de ces tubes et leurs reprises de forme étant améliorées.

FIG. 1

EP 0 465 391 A1

L'invention concerne un procédé de façonnage d'une feuille ou d'une pièce tubulaire mince, typiquement dans le domaine de l'emballage.

Le document FR-A-2545449 = US 4580702 enseigne l'obtention d'un tube en matière plastique ayant une tête moulée sur une jupe souple facile à presser et ayant une bonne stabilité. Pour cela, des facettes séparées par des arêtes sont créées par extrusion de la jupe puis par l'injection de la tête sur la jupe, l'épaulement de la tête comportant des facettes et des arêtes se raccordant aux arêtes de la jupe. Ce raccordement et alignement des arêtes assurent ainsi la stabilité élastique de la jupe.

Ce procédé lie de façon rigoureuse les géométries et les fabrications de la jupe et de la tête injectée, ce qui est un inconvénient pour des fabrications de série.

La demanderesse a cherché à mettre au point un procédé de réalisation plus simple d'un tube dont la jupe a des arêtes et est de bonne stabilité élastique.

## EXPOSE DE L'INVENTION

L'invention a pour objet un procédé d'obtention d'un pli sur un élément d'emballage consistant en une feuille ou une pièce tubulaire en matière plastique d'épaisseur 0,25 à 0,8 mm, caractérisé en ce qu'on lamine au moins un pli formant double épaisseur d'une portion repliée de ladite feuille, ou d'une portion longitudinale pliée ou pincée de ladite pièce tubulaire entre des galets serrant ledit pli ou ladite portion de façon à obtenir un pli écrasé par ce laminage présentant à son sommet ou arête saillante une striction extérieure de profondeur comprise entre 2% et 15% de ladite épaisseur, le pli étant de ce fait permanent et articulé élastiquement.

Le pliage à bloc produit par un tel laminage produit une rupture superficielle de l'extérieur du pli, et la plus grande partie de la matière plastique sous-jacente a été déformée élastiquement, de sorte que cette matière sous-jacente amincie du fait de la rupture extérieure forme une charnière ayant un retour élastique et créant de ce fait une stabilité élastique de la géométrie de la structure obtenue. Ce laminage résoud le problème posé et peut également être utilisé pour d'autres problèmes de plis articulés sur des feuilles ou tubes minces en matière plastique.

Lorsque l'écartement des galets de laminage est diminué, entraînant une augmentation de la compression du pli de matière plastique lors du laminage, l'importance de la striction ou rupture arrondie extérieure augmente. On a simulé en les exagérant des pressages successifs de tube souple selon l'invention et on en a conclu que cette striction n'évoluait que lentement, ladite charnière s'amincissant légèrement sans qu'il apparaisse de risque de percement. On a observé que l'intérieur de chaque pli ne présentait pas de creux au départ, c'est-à-dire juste après laminage, et qu'en pratique, il ne s'y développera après des pliages successifs qu'un creux de profondeur inférieure à 5 % de l'épaisseur. Par sécurité vis à vis de l'étanchéité du pli, on préfère cependant limiter le serrage du laminage par contrôle de l'importance de la striction extérieure obtenue, ou encore régler l'écartement des galets de laminage à une valeur comprise entre 1,7 fois et 2 fois l'épaisseur de la feuille ou pièce tubulaire.

Dans le cas de l'ébauche tubulaire d'une jupe d'un tube dont la tête est ensuite moulée sur une extrémité de cette jupe, on réalise ainsi au moins deux plis longitudinaux opposés de ladite jupe avant de mouler la tête. Ces plis articulés peuvent être réalisés soit sur toute la hauteur de la jupe, soit sur une partie seulement de cette hauteur, la présence de plis au raccordement de la tête n'étant pas gênante pour son moulage effectué avec les mêmes outillages que ceux utilisés pour une jupe sans pli. Utiliser ainsi le même moulage que d'habitude est un avantage important de l'invention.

Les plis longitudinaux de la jupe ébauche sont réalisés soit par pincement et laminage de chaque pli, soit par passage de toute la largeur de la jupe entre deux galets pour réaliser deux plis opposés.

De façon générale, on peut plier selon l'invention une feuille ou une pièce tubulaire de diverses matières plastiques, en particulier : du polyéthylène (PE), du polypropylène (PP), des polyesters, des multicouches métalloplastiques ou en matières plastiques pouvant comprendre au moins une couche interne barrière, des couches adhésives, une couche externe support de décoration et une couche interne assurant la bonne conservation du produit contenu.

Par multicouche métalloplastique, on entend une feuille ou pièce ayant au moins une couche barrière interne métallique, les couches superficielles étant en matière plastique.

Dans le cas d'un tube, et pour les raisons déjà indiquées (pressages répétés en service), on préfère adopter pour les laminages en plis des écartements de galets compris entre 1,8 fois et 1,95 fois l'épaisseur de la jupe ébauche.

De façon intéressante, on peut transformer une ébauche de jupe circulaire en une ébauche à 4 plis disposés en section droite aux sommets d'un rectangle ou d'un carré, en laminant simultanément avec serrage 4 portions longitudinales de ladite ébauche entre 4 galets à surfaces tronconiques, ces surfaces entourant l'ébauche et serrant entre eux lesdites portions, ces galets laissant libres ou laissant glisser librement les portions intermédiaires incurvées de ladite ébauche. Après desserrage des galets et dégagement de l'ébauche laminée, on obtient ainsi une ébauche quasi rectangulaire ou carrée. Et en recommençant un laminage semblable après avoir tourné l'ébauche, on obtient une ébauche octogonale.

On peut aussi obtenir un pliage en soufflet comportant 4 plis extérieurs de sommets ou arêtes disposées aux sommets d'un rectangle et 2 plis rentrants, en faisant une conformation d'approche sur l'ébauche tubulaire créant sur cette ébauche deux portions opposées incurvées et en la faisant suivre d'un laminage de toute la largeur de l'ébauche ainsi conformée, les plis extérieurs étant laminés de façon superposée deux à deux et les plis rentrants subissant dans ce laminage le même écrasement que les plis extérieurs.

L'écartement des galets est réglé, pour le laminage simultané de 4 épaisseurs de l'ébauche, de préférence à 3,6 à 3,95 fois cette épaisseur.

Un pliage en soufflet peut également être obtenu par un pliage à 4 galets comme le pliage en quasi rectangle, deux galets opposés tendant et serrant par leurs extrémités les portions intermédiaires incurvées de l'ébauche au lieu de les laisser libres comme précédemment. Ces galets opposés ont typiquement des extrémités en arête circulaire, qui créent une légère dépression au fond de chaque pli rentrant.

L'invention permet ainsi de réaliser simplement des présentations variées de feuilles ou jupes en matière plastique portant des plis d'articulation élastique, en particulier des plis d'espacements différents, le raccordement de la tête par moulage n'étant pas perturbé dans le cas d'un tube à jupe souple. La décoration de la surface n'est pas affectée par les plis en dehors des lignes de striction qui les caractérisent.

La décoration de la feuille ou jupe est faite préalablement au pliage, en y introduisant typiquement un élément de repérage qui permet de lire le décor et de le positionner par rapport aux futurs plis ainsi que, par la suite, par rapport à la soudure de fermeture du tube. Cette technique permet d'obtenir facilement des plis disposés symétriquement par rapport au plan de symétrie du tube perpendiculaire à la soudure, ces plis étant de préférence également symétriques par rapport au plan de symétrie contenant la soudure et se rejoignant dans cette soudure. Des tubes à épaule circulaire, elliptique ou polygonale peuvent être obtenus.

## ESSAIS ET EXEMPLES

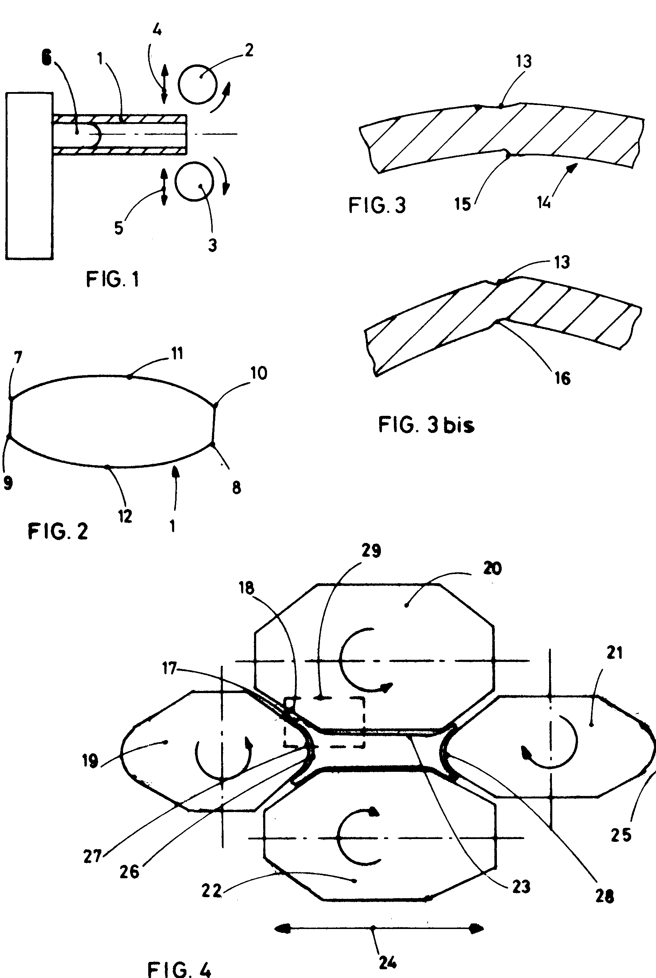

. La figure 1 représente une disposition de laminage d'une ébauche tubulaire qui est coupée axialement.

. La figure 2 représente en section droite un tube à 4 plis longitudinaux selon l'invention.

. Les figures 3 et 3 bis représentent une feuille portant un pli, avant et après des serrages avec compression de ce pli.

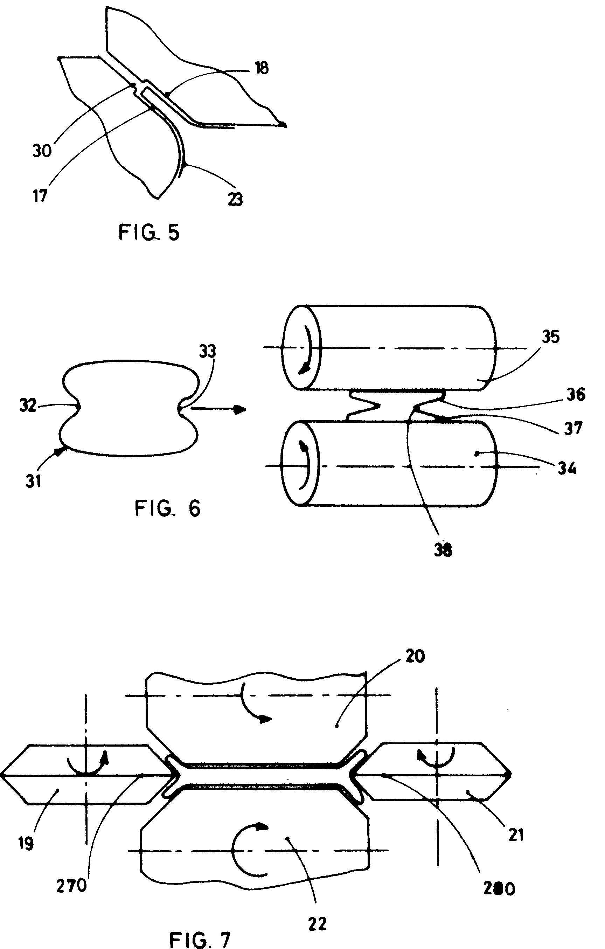

. La figure 4 représente un laminage à 4 galets.

. La figure 5 représente un moyen d'ajustement des largeurs laminées.

. La figure 6 représente l'étape de laminage d'un premier mode d'obtention d'une jupe à soufflet représentée en section droite.

. La figure 7 représente un laminage à 4 galets selon le deuxième mode d'obtention d'une jupe à soufflet.

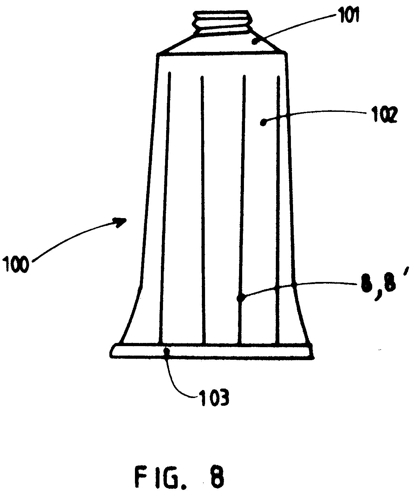

. La figure 8 représente en élévation un deuxième tube selon l'invention

Sur la figure 1, on voit une ébauche tubulaire 1 de la jupe d'un tube, sur le point d'être laminée entre deux galets 2 et 3 cylindriques d'écartement réglable comme schématisé par les doubles flèches 4 et 5. L'ébauche 1 est tenue à bonne hauteur par un mandrin 6 dont elle sera dégagée par le laminage

La figure 2 représente la section droite d'une telle ébauche 1 décorée extérieurement en vert, d'épaisseur 0,5 mm en PE.HD, ses plis opposés 7 et 8 puis 9 et 10 ayant été obtenus par deux laminages successifs, le 2° laminage serrant à plat l'ébauche décalée angulairement par rapport au premier laminage. L'écartement des galets était de 0,95 mm soit 1,9 fois l'épaisseur de l'ébauche, on a observé en pressant sur les grandes faces bombées 11 et 12 une fine ligne blanche en creux à l'endroit de chaque pli. L'examen en coupe d'une section droite de cette ébauche montre que chaque ligne blanche est une surface extérieure de striction telle que 13 sur la figure 3, de profondeur comprise entre 0,025 et 0,03 mm.

Sur la figure 3, on peut voir la section droite d'une feuille 14, également en PE.HD d'épaisseur 0,5 mm laminée de la même façon que les plis 7 à 10 de l'ébauche 1.

La striction extérieure 13 a déjà été présentée, on remarque également une aspérité 15 à l'intérieur du pliage, produite par ce pliage avec compression. On a soumis cet échantillon à 300 pliages à bloc entre deux plateaux en acier, la longueur du pli étant de 20 mm, l'effort de compression au pliage étant de 10 daN et l'écartement observé pour les plateaux étant de 0,93 mm soit 1,86 fois l'épaisseur de 0,5 mm.

Entre les pliages, le pli s'écartait, prouvant sa mémoire élastique. Sur coupe en section droite (figure 3 bis), on a observé après les 300 pliages l'évolution suivante : la profondeur de la striction extérieure 13 était de 0,048 mm, et le relief intérieur 15 avait produit un creux 16 de profondeur 0,032 mm. Une telle évolution, exagérant beaucoup les pliages par pressées successives d'un tube rempli de produit, montre que la solution proposée ne présente pas de risque pour la pratique.

La figure 4 montre un laminage simultané de 4 plis selon l'invention entre les surfaces tronconiques telles que 17 et 18 de quatre galets 19 à 22. L'ébauche 23 est pincée longitudinalement et serrée selon la règle de l'invention, grâce aux possibilités d'écartement et de rapprochement précis des galets 19 à 22 symbolisées par les doubles flèches 24 et 25. Les surfaces en creux 26 de l'ébauche 23 peuvent glisser librement sur les portions intermédiaires 27 et 28 des galets 19 et 21, on obtient après laminage une jupe à 4 plis d'allure rectangulaire.

La figure 5 montre un détail correspondant au rectangle en traits discontinus 29 de la figure 4. Un rétrécissement 30 de l'intervalle entre les surfaces tronconiques de l'intervalle entre les surfaces tronconiques 17 et 18 des galets 19 et 20 permet d'ajuster la rentrée de l'ébauche 23 entre ces surfaces 17 et 18. De tels retrécissements contribuent au positionnement reproductible des ébauches pendant le laminage, et donc à la reproductibilité de leurs formes après laminage.

La figure 6 montre à gauche l'ébauche 31 conformée en approche avec deux portions opposées 32 et 33 déjà incurvées. Cette ébauche 31 est laminée, dès sa sortie des galets d'approche, entre les galets 34 et 35 avec un écartement des galets de 3,6 à 3,95 fois l'épaisseur de l'ébauche 31. Les plis extérieurs tels que 36 et 37 sont laminés en superposition, et les plis intérieurs tels que 38 sont comme les plis extérieurs serrés en épaisseur quadruple. On obtient un soufflet à plis articulés élastiquement, avec une légère striction à l'extérieur de chaque pli.

La figure 7 montre un 2° mode d'obtention d'un soufflet, qui ne diffère du laminage de la figure 4 que par le remplacement des portions intermédiaires 27 et 28 des galets 19 et 21 par des prolongements de leurs surfaces tronconiques formant des arêtes d'extrémité 270 et 280. Ces surfaces tronconiques et ces arêtes circulaires tendent et serrent en coopération avec les galets 20 et 22 les portions en creux de l'ébauche 23, une rayure ou un léger creux du fond de chaque pli est alors obtenu.

La figure 8 représente un tube 100 dont la tête 101 en PE.HD est moulée sur une extrémité de sa jupe 102 également en PE.HD décorée et pliée selon l'invention avec 8 plis écrasés 8, chaque pli 8 et le pli correspondant 8' de la face cachée ou verso se rejoignant dans la soudure 103.

## APPLICATIONS INDUSTRIELLES

Tubes à jupe souple en matière plastique ou métalloplastique, conditionnant des produits très divers (cosmétiques, hygiéniques, pharmaceutiques, alimentaires, d'entretien), les pressées de ces tubes et leurs reprises de forme étant améliorées par l'invention.

## Revendications

1. Procédé d'obtention d'un pli sur une feuille ou une pièce tubulaire (1) en matière plastique d'épaisseur 0,25 à 0,8 mm, caractérisé en ce qu'on lamine au moins un pli (7 à 10) formant double épaisseur d'une portion repliée de ladite feuille ou d'une portion longitudinale pliée ou pincée de ladite pièce tubulaire (1;23;31) entre des galets (2,3; 19 à 22; 34,35) serrant ledit pli ou ladite portion de façon à obtenir un pli (7 à 10) écrasé par ce laminage présentant à son sommet une striction extérieure (13) de profondeur comprise entre 2% et 15% de ladite épaisseur, ce pli étant alors articulé élastiquement.

2. Procédé selon la revendication 1, dans lequel l'écartement (24,25) desdits galets (2,3; 19,21 et 20,22; 34,35) est compris entre 1,7 fois et 2 fois ladite épaisseur de ladite feuille ou pièce tubulaire (1).

3. Procédé selon la revendication 2, dans le cas d'une dite pièce tubulaire (1) qui est l'ébauche (1) d'une jupe (102) d'un tube (100) dont la tête (101) est ensuite moulée sur une extrémité de ladite jupe, et dans lequel on lamine au moins deux portions longitudinales opposées de ladite ébauche.

4. Procédé selon la revendication 3, dans lequel on lamine simultanément les deux dites portions, par passage de toute la largeur de ladite jupe ébauche (1; 31) entre lesdits galets (2 et 3; 34 et 35).

5. Procédé selon l'une quelconque des revendications 3 ou 4, dans lequel on lamine lesdites portions longitudinales entre des galets (2, 3) d'écartement compris entre 1, 8 fois et 1,95 fois l'épaisseur de ladite jupe ébauche (1).

6. Procédé selon la revendication 3, dans lequel on lamine simultanément 4 portions longitudinales de ladite ébauche (23) entre 4 galets (19 à 22) à surfaces tronconiques (17, 18) serrant entre elles lesdites portions, lesdits galets laissant libre ou glissant sur ladite ébauche (23) entre ses dites portions.

7. Procédé selon la revendication 3, dans lequel on conforme ladite ébauche (31) selon une forme préalable comportant deux portions opposées incurvées (32, 33) et on la lamine sur toute sa largeur entre deux galets (34, 35), laminant alors simultanément 4 plis extérieurs (36, 37) superposés 2 à 2 et 2 plis rentrants (38), obtenant ainsi un pliage en soufflet de ladite ébauche.

8. Procédé selon la revendication 7, dans lequel on règle l'écartement des deux galets (35, 36) à 3,6 fois à 3,95 fois l'épaisseur de ladite ébauche tubulaire (31).

9. Procédé selon la revendication 3, dans lequel on lamine simultanément 4 portions longitudinales de ladite ébauche entre 4 galets à surface tronconique (19 à 22) serrant entre eux (19,21 et 20,22) lesdites portions, 2 galets opposés (19, 21) tendant et serrant alors entre eux par leurs extrémités en arête circulaire (270, 280) deux portions intermédiaires incurvées de ladite ébauche, de façon à la plier en soufflet.

10. Procédé selon l'une quelconque des revendications 1 à 9, dans le cas où la feuille ou la pièce tubulaire (1) ou l'ébauche de jupe (102) est en l'une des matières plastiques ou multicouches à base de matières plastiques du groupe suivant : PE, PP, polyesters, multicouches métalloplastiques, ou en matières plastiques.

11. Procédé selon l'une quelconque des revendications 1 à 10, dans lequel on décore préalablement ladite feuille ou portion longitudinale (1), on lit le décor obtenu et on positionne ladite feuille ou portion décorée pour ledit laminage de façon à situer son décor par rapport aux plis (7 à 10) .

12. Tube (100) à tête (101)moulée sur une extrémité de sa jupe (102) en matière plastique ou métalloplastique, obtenable au moyen du procédé de l'une quelconque des revendications 1 à 11, ladite jupe (102) comportant seule au moins deux plis longitudinaux opposés (8, 8′) articulés élastiquement, chacun de ces plis (8, 8′)comportant une striction extérieure de profondeur comprise entre 2 et 15% de l'épaisseur de ladite jupe (102).

13. Tube (100) selon la revendication 12, à extrémité inférieure soudée (103), les plis (8, 8′) des grandes faces du tube rempli se terminant dans la soudure (103).

FIG. 1

FIG. 3

FIG. 3 bis

FIG. 2

FIG. 4

FIG. 5

FIG. 6

FIG. 7

101

102

100

8,8'

103

FIG. 8

Office européen
des brevets

# RAPPORT DE RECHERCHE EUROPEENNE

Numero de la demande

EP 91 42 0227

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 504 067 (L.J. TRECEK) <br> * Colonne 3, ligne 67 - colonne 5, ligne 2; colonne 5, ligne 48 - colonne 6, ligne 9; figures 1,3,4,6,7 * | 1-10,12 ,13 | B 29 C 53/06 |
| A | EP-A-0 117 730 (HMW) <br> * Page 8, lignes 11-25; page 12, ligne 26 - page 13, ligne 2; page 14, lignes 20-33; page 17, ligne 19 - page 18, ligne 26; figures 5,16,18,20 * | 1,3,4,6 ,7,10, 12 | |
| A | DE-A-3 506 772 (WINDMÖLLER & HÖLSCHER) <br> * Page 7, lignes 1-28; page 8, lignes 26-32; page 9, lignes 23-28; figures 1,4,6 * | 1,6,7 | |
| A | US-A-4 789 515 (S.S. CHIYU) <br> * Colonne 3, ligne 63 - colonne 4, ligne 53; figures 5A-D,7,8,9,10A-C * | 1,10,12 | |
| A | US-A-3 374 298 (C.E. STUDEN) <br> * Colonne 3, lignes 1-51; figures 1,3 * | 1,12 | DOMAINES TECHNIQUES RECHERCHES (Int. Cl.5) |
| A | GB-A-1 215 715 (CANADIAN INDUSTRIES LTD) <br> * Page 2, colonne de gauche, ligne 29 - colonne de droite, ligne 70; figure 1 * | 1,6,9 | B 29 C <br> B 31 B |

Le présent rapport a été établi pour toutes les revendications

| Lieu de la recherche | Date d'achèvement de la recherche | Examinateur |
|---|---|---|
| LA HAYE | 11-10-1991 | TOPALIDIS A. |

EPO FORM 1503 03.82 (P0402)